# EUROPÄISCHE PATENTANMELDUNG

(11) **EP 1 710 463 A1**
(43) Veröffentlichungstag der Anmeldung: **11.10.2006**
(21) Anmeldenummer: 06007250.1
(22) Anmeldetag: 06.04.2006
(51) Int. Cl.: F16D 55/2255

(54) **Schwenksattel-Scheibenbremse mit einem verschiedene Schwenkachsen aufweisenden Bremssattel**

(30) Priorität: 07.04.2005 DE 102005015857
(71) Anmelder: DaimlerChrysler AG, 70567 Stuttgart (DE)
(72) Erfinder: Jäckel, Klaus, 89278 Nersingen (DE); Lesch, Martin, 71336 Waiblingen (DE); Quinger, Christian, 73614 Schorndorf (DE); Salewski, Thomas, 73650 Winterbach (DE)

(57) **Zusammenfassung**

Die Erfindung betrifft eine Schwenksattel-Scheibenbremse mit einer Bremsscheibe (30) und mit einem mit zwei Bremssattelarmen (43,44) ausgestatteten Bremssattel (40), wobei die Bremssattelarme über Schwenkgelenke (17,61,18,62) am Radträger (10) oder an der Fahrzeugachse angelenkt sind und wobei der Bremssattel mindestens ein Antriebsglied (97) und mindestens zwei Bremsbacken (71,72) lagert. Dazu spannen die gedachten Schwenkachsen (81,82) - als parallele oder sich schneidende Geraden - eine Ebene (83,84) auf oder kreuzen sich. Hierbei sind die Bremssattelarme zumindest quer zu der von ihnen aufgespannten Ebene wenigstens bereichsweise elastisch ausgeführt und/oder die Schwenkgelenke haben elastische Bereiche (49), die in bestimmten Richtungen gegenüber den übrigen Richtungen größere Elastizitäten aufweisen.

Mit der vorliegenden Erfindung wird eine Schwenksattel-Scheibenbremse entwickelt, die im Bereich der Schwenksattellagerung bei wenig Einzelteilen einen einfachen Aufbau hat.

## Beschreibung

Die Erfindung betrifft eine Schwenksattel-Scheibenbremse mit einer Bremsscheibe und mit einem mit zwei Bremssattelarmen ausgestatteten Bremssattel, wobei die Bremssattelarme über Schwenkgelenke am Radträger oder an der Fahrzeugachse angelenkt sind und wobei der Bremssattel mindestens ein Antriebsglied und mindestens zwei Bremsbacken lagert.

Aus dem Buch "Nutzfahrzeugbremsanlagen" von Hans-Peter Klug, Vogelbuchverlag Würzburg, Auflage 3, 1993, Seiten 324-326 ist eine Schwenksattel-Scheibenbremse bekannt. Der Bremssattel ist hierbei über zwei Schwenkgelenke am Radträger gelagert, wobei die Schwenkgelenke eine horizontale, die Raddrehachse schneidende Schwenkachse aufweisen. Der Bremszylinder wirkt direkt auf den innen liegenden Bremsbacken. Eine mechanische Feder stellt beim Lösen der Bremse den Bremssattel zurück.

Der vorliegenden Erfindung liegt die Problemstellung zugrunde, eine Schwenksattel-Scheibenbremse zu entwickeln, die im Bereich der Schwenksattellagerung bei möglichst wenigen Einzelteilen einen einfachen Aufbau hat und bei kleinem Bauraum dauerhaft und zuverlässig funktioniert.

Diese Problemstellung wird mit den Merkmalen des Hauptanspruches gelöst. Dazu spannen die gedachten Schwenkachsen der Bremssattelarmschwenkgelenke - als parallele oder sich schneidende Geraden - eine Ebene auf oder kreuzen sich. Hierbei sind die Bremssattelarme zumindest quer zu der von ihnen aufgespannten Ebene wenigstens bereichsweise elastisch ausgeführt und/oder die Schwenkgelenke haben elastische Bereiche, die in bestimmten Richtungen gegenüber den übrigen Richtungen größere Elastizitäten aufweisen, wobei bei parallelen Schwenkachsen die Richtungen größerer Elastizität normal zur - von den Schwenkachsen gebildeten - Ebene orientiert sind oder wobei bei sich schneidenden Schwenkachsen die Richtungen größerer Elastizität normal zur - von den Schwenkachsen gebildeten - Ebene und längs der jeweiligen Schwenkachse orientiert sind oder wobei bei sich kreuzenden Schwenkachsen die Richtungen größerer Elastizität normal zu einer Ebene liegen, die den kürzesten Abstand der Schwenkachsen mittig und lotrecht schneidet und längs der jeweiligen Schwenkachse orientiert sind.

Mit den übrigen Richtungen werden alle die Richtungen bezeichnet, in denen die Gelenke oder elastischen Bereiche der Bremssattelarme keine besondere Elastizität benötigen und die nicht explizit genannt sind.

Bei Scheibenbremsen, die nur auf einer Bremsscheibenseite ein oder mehrere Antriebsglieder zum Bewegen der Bremsbeläge aufweisen, werden in der Regel entweder die Bremsscheiben gegenüber der Radnabe oder der Bremssattel gegenüber dem Radträger bzw. anderen nichtrotierenden Achsteilen querverschiebbar gelagert. Diese jeweilige Querverschiebbarkeit muss bei jeder Bremsenbetätigung sicher gewährleistet sein. Gerade bei geländegängigen Nutzfahrzeugen, deren Fahrwerke einer überdurchschnittlichen Schmutzbelastung ausgesetzt sind, neigen Schiebefugen zum Klemmen durch Verschmutzen. Eine Lösung stellt hier eine Scheibenbremse mit einem schwenkbaren Bremssattel dar. Derartige Bremsen benötigen für die Rückstellung in der Regel separate mechanische Federn, die beim Lösen der Bremse den Bremssattel wieder gegen einen Anschlag drücken. Bei Schmutzbelastung kann zwischen die Federn und die sich kontaktierenden Anschlagteile Schmutz gelangen, so dass ein einwandfreies verschleißminderndes Lüften der Bremsbeläge oft nicht möglich ist.

Anstelle der auf separaten Federn basierenden Rückstellmechanik wird erfindungsgemäß der Bremssattel und dessen Lagerung am Radträger oder z.B. am Achsschenkel einer Starrachse über eine "verspannte" Schwenklagerung in Kombination mit gezielten Elastizitäten am Bremssattel bewirkt. Hierbei kann der Bremssattel über seine Arme am Radträger oder an der Starrachse in diskreten Schwenkgelenken mit entsprechenden gleit- oder wälzgelagerten Bewegungsfugen gelagert sein. Die Bremssattelarme und/oder die elastisch nachgiebigen Schwenkgelenke übernehmen die federnde Rückstellung des Bremssattels beim Lösen der Bremse.

Genauso gut kann der Bremssattel starr am Radträger oder der Starrachse befestigt werden. Hier übernehmen Taillen oder andere Engstellen im Bereich der Bremssattelarme ersatzweise die Funktion der Schwenkgelenke. Zusätzlich können die für die Rückstellung notwendigen elastischen Zonen konstruktiv in die Bereiche der Engstellen oder in deren nähere Umgebung gelegt werden.

Die Schwenksattel-Scheibenbremse kann in nahezu allen Fahrzeug- und Achstypen eingebaut werden. Dabei können die Räder dieser Achsen auch gelenkt und/oder angetrieben sein.

Weitere Einzelheiten der Erfindung ergeben sich aus den Unteransprüchen und der nachfolgenden Beschreibung schematisch dargestellter Ausführungsformen:
- Figur 1:: Radträger mit Radlagerung und Schwenksattelbremse in Teilschnitten;
- Figur 2:: Seitenansicht von innen zu Figur 1;
- Figur 3:: Bremssattel im Teilschnitt, Seitenansicht von innen;
- Figur 4:: Bremssattelarm im Querschnitt;
- Figur 5:: Bremssattelarmverformung bei formsteifen Schwenkgelenken;
- Figur 6:: Bremssattelarmverformung wie bei Figur 5, jedoch mit Filmgelenken als Schwenkgelenke;
- Figur 7:: Schwenksattellagerung bei übereinander angeordneten Schwenkachsen mit Elastomerlagern;
- Figur 8:: Schwenksattellagerung bei nebeneinander angeordneten Schwenkachsen mit Elastomerlagern;
- Figur 9:: wie Figur 1, jedoch mit sich schneidenden Schwenkachsen;
- Figur 10:: Anordnung der Gelenkhülsen bei sich kreuzenden Schwenkachsen.

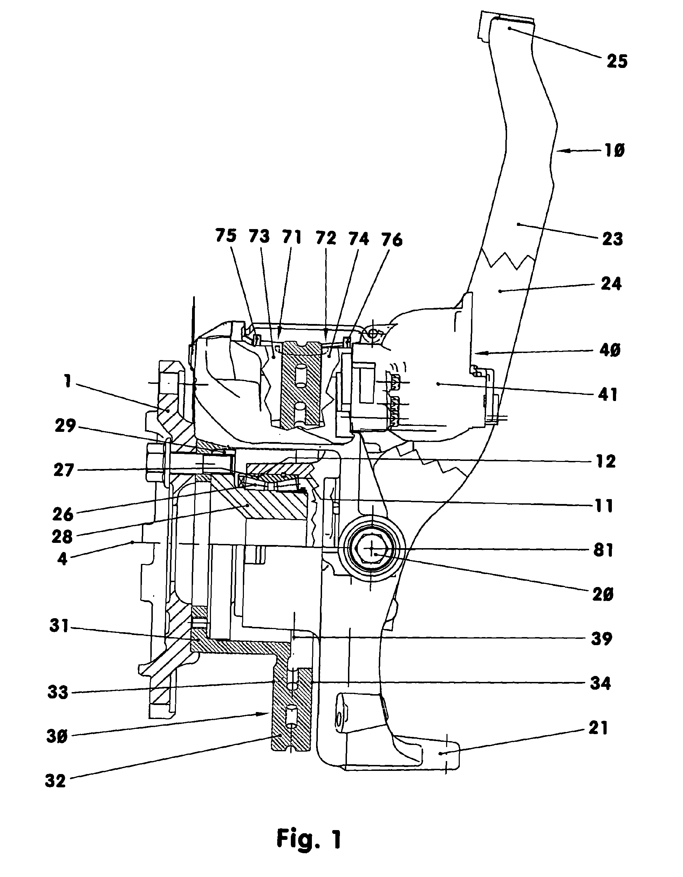

Die Figur 1 zeigt beispielhaft Teile einer Einzelradaufhängung eines z.B. nicht angetriebenen Vorderrades. Dargestellt sind ein Radträger (10) mit einer Radlagerung (26-29) und einer Teilscheibenbremse (30-99).

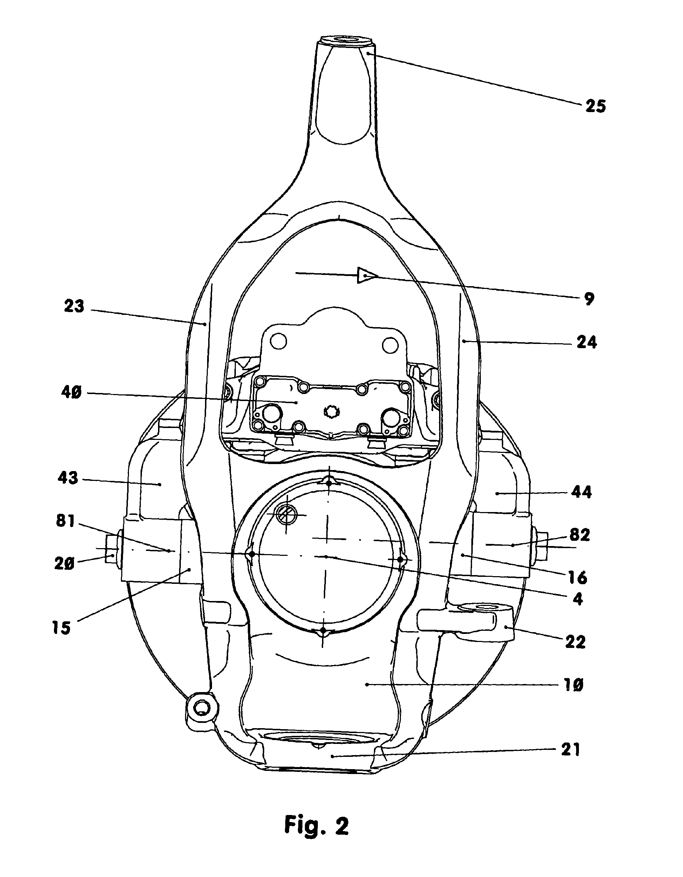

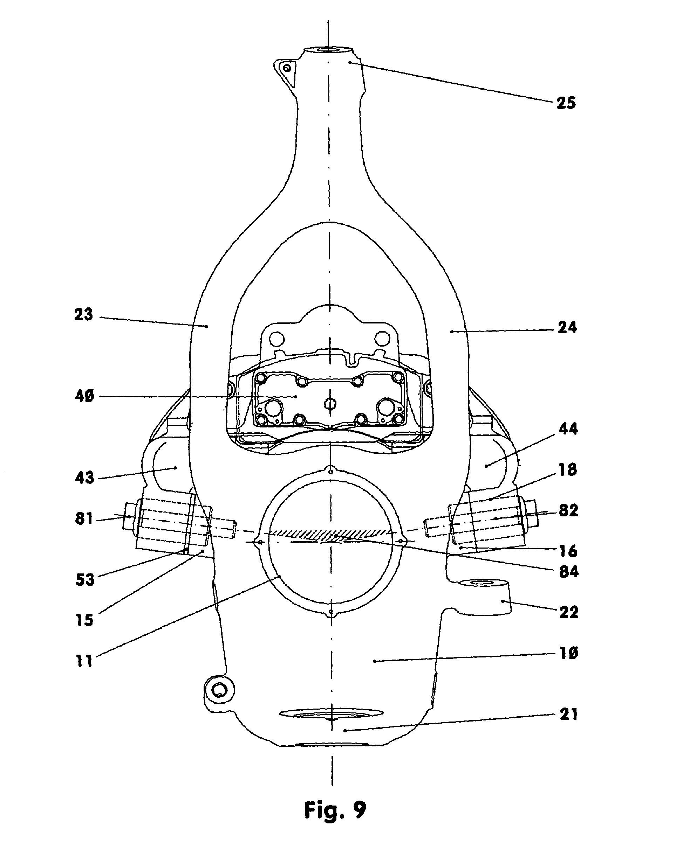

Der Radträger (10), vgl. auch Figuren 2 und 9, ist hier z.B. ein Schmiedeteil mit einer zentralen Bohrung (11, 12) zur Aufnahme eines Radlagers (26). Unterhalb der Bohrung (11, 12) befindet sich ein winkelförmig nach innen - also zur vertikalen Fahrzeugmittenlängsebene hin - gebogener Kragarm (21) zur Anlenkung an einen unteren Lenker der Einzelradaufhängung. Nach den Figuren 2 und 9 befindet sich rechts neben der Bohrung (11, 12) ein Gelenkauge (22) zur Anlenkung des Radträgers (10) durch das Lenkgestänge. Oberhalb der Bohrung (11, 12) führen zwei sich vereinigende Radträgerarme (23, 24) zu einem hier nach außen gekröpften Gelenkauge (25). An letzterem wird der Radträger (10) über einen oberen Lenker am Fahrzeugaufbau abgestützt.

Jeweils beiderseits der zentralen Bohrung (11, 12), der in den Figuren 2 und 9 dargestellten Radträger (10), sind Bremsträgerlagerstellen (15, 16) angeformt. Die Mittellinien der Lagerstellen (15, 16), die z.B. deckungsgleich mit den Schwenkachsen (81, 82) des Bremssattels (40) sind, schneiden entweder die Raddrehachse (4) oder kreuzen sie in relativ kurzem Abstand. Dieser Abstand ist kürzer als der normale bzw. lotrechte Abstand zwischen den beiden Reibflächen (33, 34) der Bremsscheibe (30).

Im Radträger (10) sitzt in der Radlagerbohrung (12) der Außenring (27) eines zweireihigen Kegelrollenlagers (26). Der Innenring (28) dieses Lagers (26) ist mit einem Stirnflansch (29) ausgestattet, an dem die Bremsscheibe (30) und der Radfelgenträger (1) befestigt sind.

Die z.B. einteilige Bremsscheibe (30) besteht aus einem Bremsscheibentopf (31) und einem beispielsweise innengekühlten Reibring (32). Der Reibring (32) hat eine Mittelebene (39), die mittig zwischen den beiden Ebenen liegt, die jeweils durch die Reibflächen (33, 34) gebildet werden. Der Abstand der beiden Reibflächen (33, 34) des Reibrings (32) wird als Reibringstärke bezeichnet.

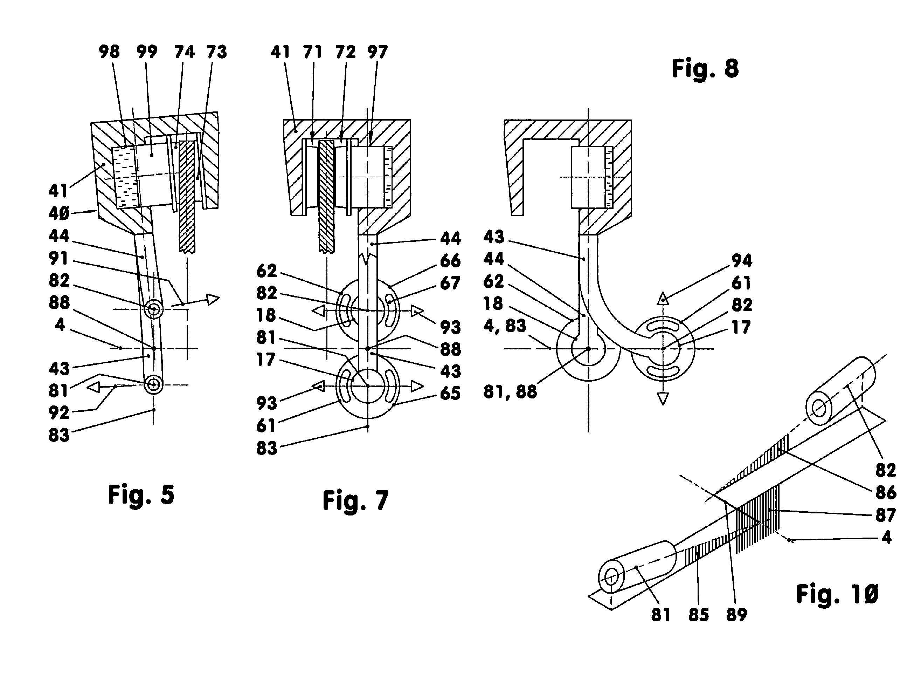

Der Bremssattel (40) umfasst ein Bremssattelgehäuse (41) mit zwei abstehenden Bremssattelarmen (43, 44). Im Bremssattelgehäuse (41) sind u.a. mindestens eine Antriebseinheit (97) und mindestens zwei Bremsbacken (71, 72) untergebracht, vgl. Figuren 5 - 7. Die Antriebseinheit (97) ist z.B. eine pneumatische oder hydraulische Zylinderkolbeneinheit (98, 99). Sie kann auch ein mechanisches, elektrisches oder elektromechanisches Stellglied sein. Gegebenenfalls besteht die Antriebseinheit aus einer Kombination der zuvor erwähnten Baugruppen.

Die Bremsbacken (71, 72) sind in der Regel aus einem Bremsbelag (73, 74) und einem Trägerblech (75, 76) aufgebaut.

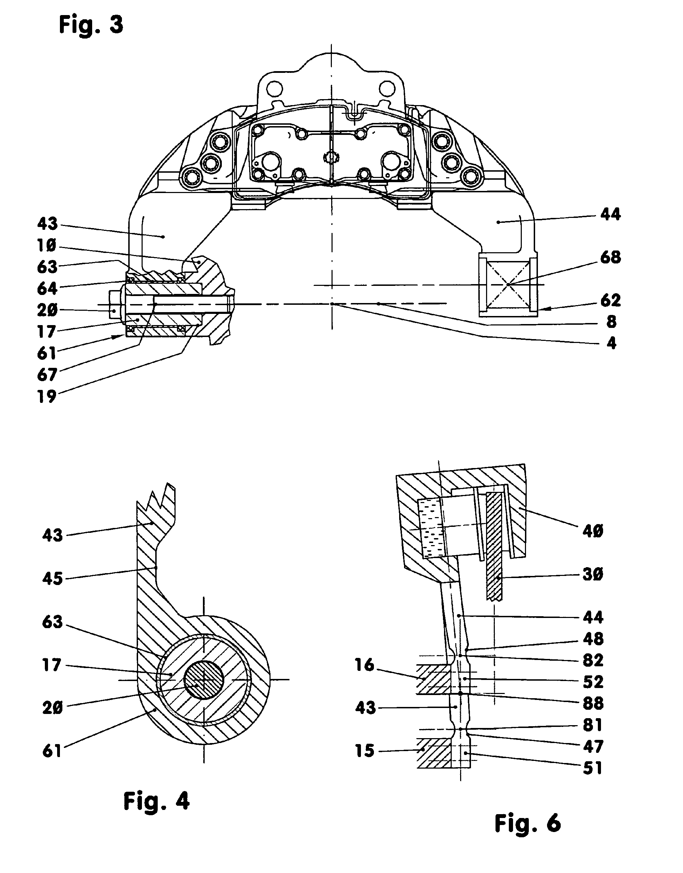

Die Bremssattelarme (43, 44) enden jeweils in einer Gelenkhülse (61, 62), vgl. Figur 3. Letztere umgreift einen am Radträger (10) mittels einer Schraube (20) befestigten Schwenkbolzen (17, 18). Der Schwenkbolzen (17, 18) und die Schraube (20) sitzen hierzu in einer Stufenbohrung (19). Die Gelenkhülse (61, 62), bzw. der Bremssattelarm (43, 44) schwenkt somit, z.B. über eine Gleitlagerhülse (63), gleitgelagert um eine gedachte Schwenkachse (81, 82). Um die Schwenklagerfuge vor Schmutz zu schützen, ist beiderseits der Gleitlagerhülse (63) je eine Dichtung (64) angeordnet.

Nach den Figuren 1, 2 und 3 wird ein derartiger gleitgelagerter Brems- bzw. Schwenksattel verwendet. Die Schwenkachsen (81, 82) verlaufen hier zueinander parallel. Sie spannen eine Ebene (83) auf. Der Parallelversatz erfolgt in diesem Ausführungsbeispiel normal zur Raddrehachse (4), vgl. auch Figur 5.

Die Ebene (83) ist von der Mittelebene (39) des Reibrings (32) z.B. ca. um die doppelte Reibringstärke versetzt. Dieser Versatz liegt je nach Bremsenbauform zwischen der halben und der zweieinhalbfachen Reibringstärke. Die hintere Schwenkachse (81) schneidet hier die Raddrehachse (4), vgl. Figur 2. Die vordere Schwenkachse (82) ist z.B. um eine halbe Reibringstärke nach oben versetzt. Dadurch entsteht am Gelenkauge (22) mehr Platz zum einbauen des nicht dargestellten Lenkgestänges. Selbstverständlich kann aber auch die hintere Schwenkachse (82) höher liegen als die vordere (81).

In Figur 5 ist der Bremssattel (40) mit den beiden höhenversetzten Schwenkachsen (81, 82) vereinfacht dargestellt. Der Schwenksattel (40) ist in metallischen Gleitlagern gelagert. Die Bremse ist betätigt und die Bremsbeläge (73, 74) sind stark abgenutzt. Durch die Abnutzung und die Betätigung wird hier das Bremssattelgehäuse (41) entgegen der Uhrzeigerdrehrichtung um eine fiktive Schwenkachse (88) einige Winkelgrade geschwenkt. Hierbei wird der hier im Vordergrund liegende, kürzere Bremssattelarm (44) elastisch nach rechts gebogen, vgl. Pfeil (91), während der hintere, längere Bremssattelarm (43) elastisch nach links verformt wird, vgl. Pfeil (92). Somit ergeben sich an den Bremssattelarmen (43, 44) in den Außenkonturbereichen (45, 46) Zonen größter Dehnung. Die Bremssattelarme (43, 44) verhalten sich wie Biegeträger. Durch ihre unterschiedlichen Längen kann sich je nach Bremssattelbauform der Biegung auch eine Torsion überlagern. Die elastischen Verformungen der Bremssattelarme (43, 44) gewährleisten eine Bremssattelrückstellung nach dem Lösen der Bremse.

Es sind auch Bremssattelbauformen denkbar, bei denen das Bremssattelgehäuse zumindest einen Teil der elastischen Verformung übernimmt.

In Figur 4 ist ein Bremssattelarm (43) im Querschnitt vergrö-ßert dargestellt. In der Gelenkhülse (61) ist die Gleitlagerhülse (63), der Schwenkbolzen (17) und die Schraube (20) im Schnitt zu erkennen. Oberhalb der Gelenkhülse (61) ist die Wandstärke des Bremssattelarmes (43) bereichsweise verringert. Dieser Bereich (49) ist beispielsweise eine besonders elastische Zone des Bremssattelarmes (43). Sie kann den größeren Teil der elastischen Biegung übernehmen.

Es ist in diesem Zusammenhang auch vorstellbar, dass das mechanische Schwenkgelenk - Gelenk mit Schwenkfuge - vollständig durch ein Biegegelenk ersetzt wird, vgl. Figur 6. Hierbei hätte der Bremssattel (40) anstelle der Schwenkgelenke z.B.

Taillen (47, 48) oberhalb zusätzlicher Verschraubungszonen (51, 52). Die jeweilige Taille (47, 48) des Bremssattelarmbereichs zwischen dieser Verschraubungszone (51, 52) und dem Bremssattelgehäuse (41) wäre dann eine Art Filmgelenkzone. Die theoretische Mitte der Filmgelenkzone entspräche nun der jeweiligen Schwenkachse (81, 82).

In Figur 7 wird ein Bremssattel gezeigt, in dessen Bremssattelarme (43, 44) elastische Gelenkeinsätze (65, 66) eingebaut sind. Das untere, vordere Gelenk (17, 61) und das obere, hintere Gelenk (18, 62) spannen mit ihren Schwenkachsen (81, 82) eine Ebene (83) auf. Normal zu dieser Ebene (83) sind die Gelenkeinsätze (65, 66) elastisch nachgiebig gestaltet, vgl. Doppelpfeile (93). Senkrecht zu diesen Doppelpfeilen (93) sind die Gelenke zumindest annähernd so steif wie die zuvor erwähnten mechanischen Gleitlagergelenke. Beispielsweise haben hierzu die Gelenkeinsätze (65, 66) seitlich sichelförmige Aussparungen (69), vgl. die Doppelpfeile (93).

Auch sind relativ harte Elastomerkörper (65, 66) denkbar, die senkrecht zur Richtung der Doppelpfeile (93) Metalleinlagen haben, so dass sie nur in Richtung der Doppelpfeile (93) elastisch nachgiebig sind.

Eine andere Alternative zeigt Figur 8. Dort sind die Schwenkachsen (81, 82) ebenfalls parallel zueinander ausgerichtet. Allerdings liegt die von den Schwenkachsen (81, 82) aufgespannte Ebene (83) parallel zur Raddrehachse (4). Hier ist das hintere Gelenk (18, 62) in alle Richtungen als relativ steifes Schwenkgelenk ausgelegt, während das vordere Gelenk (17, 61) quer zur Ebene (83) elastisch nachgiebig ist, siehe Doppelpfeil (94). Demnach schwenkt der Schwenksattel um die fiktive Schwenkachse (88), die mit der Schwenkachse (81) deckungsgleich ist oder zumindest in deren Nähe verläuft.

In Figur 9 ist an einem Radträger (10) eine Schwenksattelbremse über Bremssattelarme (43, 44) angelenkt, deren Schwenkachsen (81, 82) sich in einer Ebene (84) liegend schneiden. Da sich bei einem Verschwenken des Bremssattels (40) der mittlere Abstand zwischen den Schwenkgelenkhülsen (61, 62) der Bremssattelarme (43, 44) aufgrund der Stirnflächengeometrie der Lagerstellen (15, 16) vergrößert, sollte zumindest im Bereich einer axialen Kontaktstelle zwischen dem Radträger (10) und dem Bremssattel (40) ein Elastomerkörper (53) oder eine mechanische Feder, z.B. in Form einer Tellerfeder oder eines Tellerfederpaketes, eingebaut werden. Zusätzlich benötigt auch diese Variante zumindest bereichsweise elastische Bremssattelarme (43, 44) und/oder elastische Schwenkgelenke. Im letzteren Fall kann die Längsbeweglichkeit zumindest einer Gelenkstelle durch einen Elastomerkörper bewirkt werden.

Der in Figur 9 dargestellte Winkel zwischen den beiden Schwenkachsen (81, 82) beträgt z.B. 165 Winkelgrade. Je nach Bremssattelbauform kann er bis auf 175 Winkelgrade vergrößert werden. Hierbei können die geometrischen Mittelpunkte (67, 68) der Schwenkgelenke (17, 61; 18, 62), vgl. Figur 3, auch unterhalb einer Ebene (8) liegen, die durch die Fahrtrichtung (9), vgl. Figur 2, und die Raddrehachse (4) aufgespannt wird. Dies gilt auch für alle anderen Schwenkachsenanordnungen nach den Figuren 2, 3, 8, 9 und 10.

Gegebenenfalls können die nicht parallelen Schwenkachsen (81, 82) zusätzlich tiefenversetzt angeordnet werden, vgl. Figur 10. Dort liegen die Schwenkachsen (81, 82) in zwei zueinander parallelen Ebenen (85, 86). Beide Ebenen (85, 86) sind z.B. normal zur Raddrehachse (4) orientiert. Letztere schneiden beide Schwenkachsen (81, 82). Die für das Verschwenken und Rückstellen des Bremssattels erforderlichen Elastizitäten wirken senkrecht zu einer Ebene (87), die mittig zwischen den Ebenen (85, 86) liegt. Die Ebene (87) schneidet keine der Ebenen (85, 86) und halbiert deren kürzesten Abstand (89).

Selbstverständlich kann auch ein Teil der elastischen Nachgiebigkeit in den Radträger oder andere den Bremssattel lagernde Bauteile verlagert werden.

### Bezugszeichenliste

- 1: Radfelgenträger
- 4: Raddrehachse
- 8: Ebene, in der u.a. (4) liegt
- 9: Fahrtrichtung

- 10: Radträger
- 11: Bohrung, zentral,
- 12: Radlagerbohrung

- 15: Bremsträgerlagerstelle, hinten (bezogen auf (9))
- 16: Bremsträgerlagerstelle, vorn (bezogen auf (9))
- 17, 18: Schwenkbolzen
- 19: Stufenbohrung
- 20: Schraube

- 21: Kragarm
- 22: Gelenkauge für die Lenkung
- 23, 24: Radträgerarme, hinten, vorn (bezogen auf (9))
- 25: Gelenkauge für oberen Lenker

- 26: Radlager, Kegelrollenlager
- 27: Außenring
- 28: Innenring
- 29: Stirnflansch

- 30: Bremsscheibe
- 31: Bremsscheibentopf
- 32: Reibring
- 33, 34: Reibflächen; außen, innen
- 39: Reibringmittelebene

- 40: Bremssattel, Schwenksattel
- 41: Bremssattelgehäuse
- 43: hinterer Bremssattelarm
- 44: vorderer Bremssattelarm
- 45: Außenkonturbereich zu (43)
- 46: Außenkonturbereich zu (44)
- 47, 48: Taillen
- 49: Verengung, Wandstärkenminderung, Bereich

- 51, 52: Verschraubungszonen
- 53: Elastomerkörper

- 61: Gelenkhülse; hinten (bezogen auf (9))
- 62: Gelenkhülse, vorn (bezogen auf (9))
- 63: Gleitlagerhülse
- 64: Dichtungen

- 65, 66: Gelenkeinsätze, teilelastisch, Elastomerkörper
- 67, 68: Schwenkgelenkmittelpunkte, geometrisch
- 69: Aussparungen

- 71, 72: Bremsbacken
- 73, 74: Bremsbelag, außen, innen
- 75, 76: Trägerblech

- 81: Schwenkachse, hinten (bezogen auf (9))
- 82: Schwenkachse, vorn (bezogen auf (9))
- 83: Ebene für parallele (81, 82)
- 84: Ebene für sich schneidende (81, 82)
- 85, 86: Schwenkachsenebenen
- 87: Ebene bei sich kreuzenden (81, 82)
- 88: fiktive Schwenkachse
- 89: Abstand

- 91: Pfeil zu (44)
- 92: Pfeil zu (43)
- 93: Doppelpfeile
- 94: Doppelpfeil

- 97: Antriebsglied, Antriebseinheit
- 98: Zylinder
- 99: Kolben

## Patentansprüche

1. Schwenksattel-Scheibenbremse mit einer Bremsscheibe (30) und mit einem mit zwei Bremssattelarmen (43, 44) ausgestatteten Bremssattel (40), wobei die Bremssattelarme (43, 44) über Schwenkgelenke (17, 61; 18, 62) am Radträger(10) oder an der Fahrzeugachse angelenkt sind und wobei der Bremssattel (40) mindestens ein Antriebsglied (97) und mindestens zwei Bremsbacken (71, 72) lagert, **dadurch gekennzeichnet,**
- **dass** die gedachten Schwenkachsen (81, 82) der Schwenkgelenke (17, 61; 18, 62) - als parallele oder sich schneidende Geraden - eine Ebene (83, 84) aufspannen oder sich kreuzen und
- **dass** die Bremssattelarme (43, 44) zumindest quer zu der von ihnen aufgespannten Ebene wenigstens bereichsweise elastisch ausgeführt sind und/oder
- **dass** die Schwenkgelenke (17, 61; 18, 62) elastische Bereiche (49) haben, die in bestimmten Richtungen gegenüber den übrigen Richtungen größere Elastizitäten aufweisen,
- wobei bei parallelen Schwenkachsen (81, 82) die Richtungen größerer Elastizität normal zur Ebene (83) orientiert sind oder
- wobei bei sich schneidenden Schwenkachsen (81, 82) die Richtungen größerer Elastizität normal zur Ebene (84) und längs zu mindestens einer der jeweiligen Schwenkachse (81, 82) orientiert sind oder
- wobei bei sich kreuzenden Schwenkachsen (81, 82) die Richtungen größerer Elastizität normal zu einer Ebene (87) liegen, die den kürzesten Abstand (89) der Schwenkachsen (81, 82) mittig und lotrecht schneidet und längs zu mindestens einer der jeweiligen Schwenkachse (81, 82) orientiert sind.

2. Schwenksattel-Scheibenbremse nach Anspruch 1, **dadurch gekennzeichnet, dass** die von den gedachten Schwenkachsen (81, 82) aufgespannte Ebene (83, 84) normal zur Raddrehachse (4) orientiert ist.

3. Schwenksattel-Scheibenbremse nach Anspruch 2, **dadurch gekennzeichnet, dass** der Abstand zwischen der Ebene (83, 84) oder der bremsscheibennächsten Schwenkachse (81) oder (82) und der Mittelebene (39) des Reibrings (32) der Bremsscheibe (30) kleiner ist, als die doppelte Reibringstärke einer neuwertigen Bremsscheibe (30).

4. Schwenksattel-Scheibenbremse nach Anspruch 1, **dadurch gekennzeichnet, dass** bei parallelen Schwenkachsen (81, 82) deren Abstand kleiner ist als die eineinhalbfache Reibringstärke.

5. Schwenksattel-Scheibenbremse nach Anspruch 1, **dadurch gekennzeichnet, dass** bei parallelen, übereinander angeordneten Schwenkachsen (81, 82) die hintere - bezogen auf die Fahrtrichtung (9) - Schwenkachse (82) tiefer liegt als die vordere (81).

6. Schwenksattel-Scheibenbremse nach Anspruch 1, **dadurch gekennzeichnet, dass** mindestens ein Abstand zwischen einer Schwenkachse (81, 82) und der Raddrehachse (4) kleiner ist als die halbe Reibringstärke.
